# EUROPÄISCHE PATENTSCHRIFT

(11) **EP 3 108 476 B1**
(45) Veröffentlichungstag und Bekanntmachung des Hinweises auf die Patenterteilung: **03.01.2018**
(21) Anmeldenummer: 15703453.9
(22) Anmeldetag: 31.01.2015
(51) Int. Cl.: G10L 15/22

(54) **VERFAHREN ZUR ERFASSUNG WENIGSTENS ZWEIER ZU ERFASSENDER INFORMATIONEN MIT ZU VERKNÜPFENDEM INFORMATIONSGEHALT DURCH EINE SPRACHDIALOGEINRICHTUNG, SPRACHDIALOGEINRICHTUNG UND KRAFTFAHRZEUG**
METHOD FOR ACQUIRING AT LEAST TWO PIECES OF INFORMATION TO BE ACQUIRED, COMPRISING INFORMATION CONTENT TO BE LINKED, USING A SPEECH DIALOGUE DEVICE, SPEECH DIALOGUE DEVICE, AND MOTOR VEHICLE
PROCÉDÉ DE DÉTECTION D'AU MOINS DEUX INFORMATIONS À DÉTECTER, COMPORTANT UN CONTENU INFORMATIONNEL À COMBINER, À L'AIDE D'UN MOYEN DE DIALOGUE VOCAL, MOYEN DE DIALOGUE VOCAL ET VÉHICULE AUTOMOBILE

(30) Priorität: 22.02.2014 DE 102014002543
(43) Veröffentlichungstag der Anmeldung: 28.12.2016
(73) Patentinhaber: Audi AG, 85045 Ingolstadt (DE)
(72) Erfinder: MÖGELE, Hannes, 87634 Günzach (DE); PFLEGER, Norbert, 66132 Saarbrücken (DE); SCHEHL, Jan, 66121 Saarbrücken (DE)
(86) Internationale Anmeldenummer: PCT/EP2015/000185
(87) Internationale Veröffentlichungsnummer: WO 2015/124259

(56) Entgegenhaltungen:
- EP-A1- 1 560 200
- EP-A2- 1 598 810
- WO-A1-2004/051191
- US-A1- 2006 074 670

## Beschreibung

Die Erfindung betrifft ein Verfahren zur Erfassung wenigstens zweier zu erfassender Informationen mit zu verknüpfendem Informationsgehalt durch eine Sprachdialogeinrichtung, wobei zwischen den Erfassungen der Informationen jeweils eine Sprachausgabe durch die Sprachdialogeinrichtung erfolgt, wobei die Informationen jeweils durch Erfassung von natürlich sprachlichen Spracheingabedaten und Extraktion der jeweiligen Information aus den Spracheingabedaten durch einen Spracherkennungsalgorithmus erfasst werden.

In einer Vielzahl von Anwendungsfällen werden Sprachdialoge zur Erfassung von Bedieneingaben von technischen Einrichtungen genutzt. Eine derartige Sprachsteuerung ist insbesondere dann sinnvoll, wenn ein Benutzer zum Zeitpunkt der Spracheingabe eine weitere Tätigkeit durchführt, die seine Aufmerksamkeit zumindest teilweise beansprucht, da bei Nutzung einer Spracheingabe zur Steuerung einer Einrichtung oder zur Eingabe von Informationen keine Konzentration auf zusätzliche manuelle Bedienelemente notwendig ist. Aufgrund dieser Eigenschaften werden Sprachsteuerungen insbesondere in Kraftfahrzeugen häufig eingesetzt. So können beispielsweise Navigationssysteme, Kommunikationssysteme und Multimediaeinrichtungen in Kraftfahrzeugen durch Spracheingabe gesteuert werden.

In einer Vielzahl von Anwendungsfällen einer Sprachsteuerung ist es dabei notwendig, Informationen mit zu verknüpfendem Informationsgehalt zu erfassen. Unter Informationen mit zu verknüpfendem Informationsgehalt sind dabei Informationen zu verstehen, die in einem Sinnzusammenhang stehen, also inhaltlich verknüpft sind. So können bei einer Eingabe in ein Navigationssystem die Information mit zu verknüpfendem Informationsgehalt beispielsweise der Name einer Stadt, der Name einer Straße sowie eine Hausnummer und zusätzlich die Information, dass eine Route zu dem durch die weiteren drei Informationen beschriebenen Ort geplant werden soll, sein. Eine Liedauswahl in einem Multimediasystem kann als Informationen mit zu verknüpfendem Informationsgehalt beispielsweise den Namen des Künstlers sowie den Namen des zu spielenden Liedes oder den Namen eines Albums, das das Lied umfasst und eine zugehörige Liednummer umfassen.

Dabei kann ein Benutzer alle diese einzelnen Informationen mit zu verknüpfendem Informationsgehalt einer Sprachdialogeinrichtung im Rahmen einer einzigen Spracheingabe zur Verfügung stellen. Häufig ist jedoch gewünscht, diese Informationen einzeln zu erfassen oder es fehlen in der Spracheingabe durch den Benutzer einzelne Informationen, die zur Durchführung der Aufgabe erforderlich sind, weshalb eine Nachfrage durch das System vorgesehen sein kann.

Insbesondere bei Nutzung in einem Kraftfahrzeug ist bei derartigen komplexen mehrteiligen Spracheingaben mit dazwischenliegenden Sprachausgaben durch eine Sprachdialogeinrichtung nachteilig, dass ein Benutzer gleichzeitig mit der Führung des Sprachdialogs auch andere Aufgaben durchführen muss, die unter Umständen große Teile seiner Aufmerksamkeit beanspruchen. Daneben können Ereignisse, beispielsweise eingehende und angenommene Telefonanrufe, auftreten, die eine gleichzeitige Sprachsteuerung vollständig unmöglich machen. Solche Ablenkungen des Fahrers oder Unterbrechungen des Verfahrens zur Erfassung der Informationen können dazu führen, dass ein Dialog nicht fortgesetzt werden kann und unter Umständen von Beginn an neu durchgeführt werden muss. Dies erfordert, dass alle bereits vom Benutzer bereitgestellten Informationen erneut in das System eingegeben werden. Damit wird der Bedienkomfort gesenkt und die Interaktion zwischen Bediener und Sprachdialogsystem ist ineffizient.

Der Erfindung liegt damit die Aufgabe zugrunde, ein Verfahren der eingangs genannten Art anzugeben, bei dem erfindungsgemäß bei Erfüllung einer Wiederholungsbedingung durch die Sprachdialogeinrichtung eine natürlich sprachliche Zusammenfassungsausgabe generiert und als Sprachausgabe ausgegeben wird, die eine natürliche sprachliche Wiedergabe wenigstens einer bereits erfassten Information oder eines Teils dieser Information oder eine aus dieser Information abgeleitete Information umfasst.

Die Veröffentlichung US 2006/0074670 A1 (Weng et al.) beschreibt ein interaktives Dialogsystem in welchem Informationsinhalte über ein automatisches Nachfragen seitens des Systems ermittelt und verknüpft werden. Das System kann dabei bei der Formulierung der Fragen auf zuvor eingegebene Inhalte zurückgreifen und diese in seine Sprachausgabe einbauen.

Ähnliche Systeme sind auch aus den Veröffentlichungen EP 1560200 A1 (Jeschke und Reh) und EP 1598810 A2 (O'Neill und Hanna) bekannt.

Die Veröffentlichung WO 2004/051191 A1 (Kynast und Faenger) offenbart ein Fahrassistenzsystem in welchem Kontrollvorgänge, einschließlich Spracheingabedialoge, automatisch unterbrochen oder deaktiviert werden, wenn eine entsprechende Verkehrssituation vorliegt. Der Erfindung liegt die Idee zugrunde, einen Benutzer während eines Dialogs zur Erfassung der Informationen mit zu verknüpfendem Informationsgehalt unter gewissen Bedingungen eine Zusammenfassung des Dialogzustandes zu geben, um ihn an die Einzelheiten des Dialogs bzw. den Punkt des Dialogs, an dem er sich befindet, zu erinnern. Dabei sollen dem Benutzer insbesondere vorangegangene Eingabe innerhalb des Dialogs ins Gedächtnis gerufen werden. Daher wird eine natürliche sprachliche Zusammenfassungsausgabe generiert, die erfindungsgemäß wenigstens eine bereits erfasste Information oder ein Teil dieser Information oder eine aus dieser Information abgeleitete Information umfasst. Dabei ist zu beachten, dass die adressierte Funktion, also ob beispielsweise ein zu spielendes Lied für ein Multimediasystem ausgewählt werden soll oder ein Termin in einen Terminkalender eingetragen werden soll, häufig ebenfalls durch die Sprachdialogeinrichtung erfasst wurde und daher ebenfalls eine der Informationen mit zu verknüpfendem Informationsgehalt darstellt. Diese Information, die die adressierte Funktion beschreibt, kann dabei eine Art Klammer oder Rahmen für die weiteren Informationen bilden und durch diese Information kann insbesondere bestimmt sein, welche weiteren Informationen zu erfassen sind und in welcher Art deren Informationsgehalt verknüpft ist. Die Art der zu erfassenden Informationen und die Art, wie der Informationsgehalt zu verknüpfen ist, kann jedoch auch anderweitig vorgegeben sein, beispielsweise wenn das Verfahren im Kraftfahrzeug durchgeführt wird und ein weiteres Verfahren aktiv einen Sprachdialog mit einem Benutzer startet.
In Abhängigkeit einer der zu erfassenden Informationen oder einer externen Vorgabe ist für jede der Informationen damit eine Bedeutung der jeweiligen Information im Zusammenhang mit den weiteren Informationen definiert, also eine Semantik. Vorteilhaft können die Informationen in einer ontologie-basierten Datenstruktur erfasst werden, das heißt, dass den Informationen ein Kontext zugeordnet ist, der jede der Informationen in Beziehung mit den weiteren Informationen setzt und/oder der der Information eine konkrete Bedeutung zuweist. Die Zuweisung der Bedeutung kann dabei dadurch erfolgen, dass in Abhängigkeit einer Vorgabe oder einer ersten Information, die die Art des Dialoges beschreibt, eine bestimmte Datenstruktur gewählt wird, in der die einzelnen Informationen an vorgegebenen Positionen gespeichert werden. Ergänzend oder alternativ kann die Datenstruktur jedoch auch Metadaten umfassen, die den Zusammenhang zwischen den erfassten Informationen und/oder eine zugeordnete Bedeutung für die jeweilige Information beschreiben.

Bei Erfüllung der Wiederholungsbedingung können in der Sprachdialogeinrichtung damit ein oder mehrere Informationen sowie eine den Informationen zugeordnete Bedeutung bzw. ein den Informationen zugeordneter Zusammenhang vorliegen. Ein derartiges Vorliegen der Daten erlaubt eine besonders flexible Generierung der Zusammenfassungsausgabe. Im Folgenden soll das Vorgehen beispielhaft für die Nutzung von Metadaten erläutert werden, die jeder der erfassten Informationen einen Typbezeichner zuweisen, der eine Bedeutung der jeweiligen Information beschreibt. Eine derartige Zuordnung von Typbezeichnern zu Informationen ist beispielsweise aus der "extensible markup language" (XML) bekannt. Das beschriebene Vorgehen lässt sich jedoch auch für eine Vielzahl von weiteren Formen der Speicherung der Informationen nutzen.

Wird ein Sprachdialog durch einen Benutzer initiiert, so kann aus der ersten Spracheingabe typischerweise eine adressierte Funktion bestimmt werden. Eine solche Funktion kann beispielsweise die Eingabe eines Navigationsziels, die Auswahl einer Radiostation, das Speichern von Kontaktdaten oder Terminen oder Ähnliches sein. Die adressierte Funktion gibt zum einen den weiteren Verlauf des Dialogs vor, wobei der weitere Dialog auch baumförmig aufgebaut sein kann, das heißt, dass abhängig von weiteren Informationen die folgenden Sprachausgaben der Sprachdialogeinrichtung sowie die Art der zu erfassenden Informationen anpassbar sind. Zum anderen kann die adressierte Funktion bereits mehrere mögliche Strukturen der Zusammenfassungsausgabe vorgeben, wobei die konkret genutzte Struktur der Zusammenfassungsausgabe davon abhängig sein kann, welche der Informationen bereits erfasst sind und insbesondere von weiteren Parametern, die insbesondere die Verbosität der Zusammenfassungsausgabe, also insbesondere die Länge der Zusammenfassungsausgabe bzw. die Menge der erfassten Informationen, die diese umfasst, beeinflussen. Die Struktur der Zusammenfassungsausgabe kann dabei angeben, welche der Informationen ausgegeben werden, an welcher Stelle der Zusammenfassungsausgabe diese Informationen ausgegeben werden, in welchem Format jede der Informationen ausgegeben wird, in welchem Format die jeweilige Information ausgegeben wird, ob die Information selbst oder eine aus dieser Information abgeleitete Information oder ein Teil dieser Information ausgegeben wird und/oder welche weiteren Bestandteile die Zusammenfassungsausgabe umfasst.

Das Vorgehen soll im Folgenden beispielhaft für die Steuerung eines Terminplaners durch eine erfindungsgemäße Sprachdialogeinrichtung beschrieben werden. Ein Termin soll dabei durch die Informationen Tag, Uhrzeit, Dauer und Bezeichnung des Termins beschrieben werden. Ein Benutzer hat durch vorangehende Spracheingaben bereits eingegeben, dass ein Termin erstellt werden soll, dass dieser am 01.01.2015 um 15:00 Uhr erstellt werden soll und dass die Dauer des Termins eine Stunde ist. Im Sprachdialogsystem liegen somit als Daten die Funktion, nämlich Terminplanung, ein Datum, nämlich der 01.01.2015, eine Uhrzeit, nämlich 15:00 Uhr und eine Dauer, nämlich eine Stunde vor.

Zu diesem Zeitpunkt erfolgt eine längere Unterbrechung des Sprachdialogs, da der Benutzer durch eine Verkehrssituation abgelenkt ist. Da für längere Zeit keine Spracheingabe des Benutzers erfasst wird, ermittelt die Sprachdialogeinrichtung ein Erfülltsein der Wiederholungsbedingung, generiert eine Zusammenfassungsausgabe und gibt diese aus. Aus den gespeicherten Informationen und den Metadaten zu den gespeicherten Informationen ermittelt die Sprachdialogeinrichtung, dass die Funktion des unterbrochenen Dialogs eine Terminplanung ist, und dass bereits Informationen über ein Datum, eine Uhrzeit und eine Dauer vorliegen. Anhand dieser Informationen wählt die Sprachdialogeinrichtung eine Struktur für eine Zusammenfassungsausgabe aus einer Liste mehrerer möglicher Strukturen von Zusammenfassungsausgaben aus. Beispielhaft wird eine Struktur der Zusammenfassungsausgabe gewählt, die die einleitenden Worte "Wir waren gerade dabei einen neuen Termin für", die Angabe des Wochentags, des Datums, das Wort "um", die Uhrzeit, sowie den weiteren Ausdruck "zu erstellen." umfasst. Die gesamte Zusammenfassungsausgabe, die nach ihrer Generierung als Sprachausgabe ausgegeben wird, lautet also "Wir waren gerade dabei einen Termin für Donnerstag, den 01.01.2015 um 15:00 Uhr zu erstellen.". Anschließend kann beispielsweise eine Sprachausgabe ausgegeben werden, um nach der Bezeichnung für den Termin zu fragen. Dabei kann, wie bereits erläutert, durch weitere Parameter die Verbosität der Zusammenfassungsausgabe angepasst werden. So wurde beispielsweise in der beschriebenen Zusammenfassungsausgabe die Dauer des Termins nicht berücksichtigt. Bei Bedingungen, die eine erhöhte Verbosität anzeigen, könnte beispielsweise der Ausdruck "um 15:00 Uhr" durch den Ausdruck "von 15:00 Uhr bis 16:00 Uhr" ersetzt werden. In diesem Fall würde also aus zwei erfassten Informationen, nämlich der Uhrzeit und der Dauer eine abgeleitete Information, nämlich das Ende des Termins gebildet und als Teil der Zusammenfassungsausgabe wiedergegeben. Selbstverständlich könnten auch einzelne Informationen nicht wiedergegeben werden oder es können nur Teilinformationen wiedergegeben werden. So könnte beispielsweise statt dem Datum 01.01.2015 nur 01.01. wiedergegeben werden.

Es ist möglich, dass eine notwendige Bedingung zur Erfüllung der Wiederholungsbedingung ist, dass eine zunächst erfüllte Unterbrechungsbedingung, während deren Erfüllung die Erfassung der Informationen unterbrochen wird, nicht mehr erfüllt ist. Die Unterbrechungsbedingung kann dabei insbesondere durch Signale weiterer elektronischer Systeme, die mit der Sprachdialogeinrichtung in Verbindung stehen, erfüllt werden. Im Kraftfahrzeug kann beispielsweise eine Kommunikationseinrichtung einen eingehenden Telefonanruf bzw. die Annahme eines Telefonanrufes signalisieren, ein Radio kann den Beginn einer Verkehrsdurchsage signalisieren, eine Navigationseinrichtung kann die Ausgabe einer Navigationsanweisung signalisieren oder ein Fahrerassistenzsystem, das eine Verkehrssituation auswertet, kann bei Auftreten einer Verkehrssituation, die eine vorgegebene Bedingung erfüllt, ein Unterbrechungssignal übermitteln. Es können jedoch auch andere Situationen erfasst werden, die zur Erfüllung der Unterbrechungsbedingung führen. So kann beispielsweise erfasst werden, wenn ein weiterer Fahrzeuginsasse mit dem Fahrer spricht bzw. der Fahrer derartig spricht, dass offensichtlich keine Interaktion mit der Sprachdialogeinrichtung gewünscht ist, was beispielsweise dann erkannt werden kann, wenn über längere Zeiträume keine auf Sprachausgaben, insbesondere Fragen, der Sprachdialogeinrichtung passenden Antworten erfasst werden.

Bei erfüllter Unterbrechungsbedingung können insbesondere sowohl die Spracherfassung als auch die Sprachausgabe unterbrochen werden. Ist die Unterbrechungsbedingung nicht mehr erfüllt und sind insbesondere auch keinen weiteren Unterbrechungsbedingungen erfüllt, so kann eine automatische Wiederaufnahme eines zuvor unterbrochenen Dialogs zwischen Sprachdialogeinrichtung und Benutzer vorgesehen sein. Wie eingangs erläutert ist es nach derartigen Unterbrechungen besonders vorteilhaft den Benutzer über den Dialogzustand zu informieren, was erfindungsgemäß durch Ausgabe einer natürlich sprachlichen Zusammenfassungsausgabe erfolgt.

Die Wiederholungsbedingung kann zusätzlich die Anzahl der bereits erfassten Informationen und/oder die bereits erfassten Informationen selbst auswerten und/oder die Zeitdauer, für die die Unterbrechungsbedingung vorliegt, kann durch die Sprachdialogeinrichtung erfasst werden, wonach die Wiederholungsbedingung zusätzlich diese Zeitdauer auswerten kann. Alternativ oder zusätzlich kann bei Erfüllung der Unterbrechungsbedingung durch die Sprachdialogeinrichtung ein Komplexitätswert bestimmt werden oder erfasst werden, der ein Maß für die Belastung eines Nutzers durch das die Unterbrechung bedingende Ereignis ist, wonach die Wiederholungsbedingung zusätzlich diesen Komplexitätswert auswerten kann.

Damit kann eine Zusammenfassungsausgabe beispielsweise nur generiert und ausgegeben werden, wenn bereits mehrere Informationen erfasst wurden, da es bei wenigen bereits erfassten Informationen häufig einfacher ist, den Dialog neu durchzuführen oder die wenigen Informationen dem Benutzer weiterhin präsent sind und daher nicht wiederholt werden müssen. Eine auswertung der bereits erfassten Informationen im Rahmen der Wiederholungsbedingung ist insbesondere dann vorteilhaft, wenn diese Informationen die adressierte Funktion bestimmen und/oder es sich bei dem Dialog um einen verzweigten Dialog handelt, bei dem der Dialogverlauf, also die Wahl der Sprachausgaben durch die Sprachdialogeinrichtung sowie die Art und/oder Reinfolge der erfassten Informationen von bereits erfassten Informationen abhängig ist. Durch eine Erfassung der Zeitdauer der Unterbrechung kann insbesondere bei kurzen Unterbrechungen vermieden werden, eine Zusammenfassungsausgabe zu generieren und auszugeben, da in diesen Fällen davon auszugehen ist, dass der Dialogzustand dem Benutzer weiterhin bekannt ist. Daher kann die Wiederholungsbedingung insbesondere auswerten, ob die Zeitdauer einen Grenzwert überschreitet. Ergänzend kann durch Auswertung der Art der Unterbrechung oder durch Informationen von jenen Systemen, die die Unterbrechung ausgelöst haben oder Ähnlichem ein Belastungsgrad des Benutzers abgeschätzt werden. Ist der Fahrer durch das die Unterbrechung bedingende Ereignis stark belastet und muss beispielsweise komplexe Tätigkeiten durchführen, so ist davon ausgehen, dass ihm der Dialogzustand nicht mehr bekannt ist, weshalb vorteilhaft eine Zusammenfassungsausgabe generiert und ausgegeben werden sollte. Andererseits ist es bei einer geringen Belastung während einer Unterbrechung wahrscheinlich, dass ein Benutzer sich auch nach etwas längerer Zeitdauer an einen Dialogzustand, das heißt zumindest die bisher angegebenen Informationen, erinnert.

Wie eingangs erwähnt kann es vorteilhaft sein, die Verbosität der Zusammenfassung abhängig von der konkreten Benutzungssituation des Sprachdialogsystems anzupassen. Daher ist es möglich, wenn zum Zeitpunkt der Erfüllung der Wiederholungsbedingung bereits mehr als eine der zu erfassenden Informationen erfasst worden ist, durch die Sprachdialogeinrichtung in Abhängigkeit eines Wiederholungsparameters für jede der bereits erfassten Informationen bestimmt wird, ob eine natürlich sprachliche Wiedergabe dieser Information oder eines Teils dieser Information oder einer aus dieser Information abgeleiteten Information in die Zusammenfassungsausgabe aufgenommen wird oder nicht.

Dabei kann durch die Sprachdialogeinrichtung die Zeitdauer, für die die Unterbrechungsbedingung vorliegt, erfasst werden, wonach der Wiederholungsparameter in Abhängigkeit von dieser Zeitdauer bestimmt wird und/oder es kann durch die Sprachdialogeinrichtung bei Erfüllung der Unterbrechungsbedingung ein Komplexitätswert bestimmt und erfasst werden, der ein Maß für die Belastung eines Nutzers durch das die Unterbrechung bedingende Ereignis ist, wonach der Wiederholungsparameter in Abhängigkeit von diesem Komplexitätswert bestimmt wird. Alternativ oder ergänzend kann der Wiederholungsparameter in Abhängigkeit von der Komplexität des Dialogs, insbesondere in Abhängigkeit von der Anzahl der zu erfassenden Informationen, bestimmt werden. Dabei können nach längeren Unterbrechungen vorteilhaft detaillierte Zusammenfassungsausgaben generiert werden, die mehrere der erfassten Informationen umfassen und nach kürzeren Unterbrechungen weniger detaillierte Zusammenfassungsausgaben generiert werden, die nur eine oder wenige der erfassten Informationen umfassen. Entsprechend kann eine größere Belastung des Nutzers während der Unterbrechung bzw. eine größere Komplexität der Tätigkeit des Benutzers während der Unterbrechung die Verbosität der Zusammenfassungsausgabe, insbesondere die Menge der von der Zusammenfassungsausgabe umfassten Informationen erhöhen.

Der Komplexitätswert kann dabei durch vielfältige Faktoren beeinflusst werden. So ist es möglich, dass die Unterbrechungsbeding ein Signal einer mit der Sprachdialogeinrichtung verbundenen Einrichtung auswertet, wobei die verbundene Einrichtung zusätzlich einen Einrichtungskomplexitätswert übermittelt, in Abhängigkeit dessen der Komplexitätswert bestimmt wird. Bei der verbundenen Einrichtung kann es sich beispielsweise um ein Fahrerassistenzsystem eines Kraftfahrzeugs handeln, das eine Verkehrssituation auswertet. Durch dieses Fahrerassistenzsystem kann ermittelt werden, wie komplexes Eingreifen durch den Fahrer während des Erfülltseins der Unterbrechungsbedingung erforderlich ist. Damit kann das Fahrerassistenzsystem einen Einrichtungskomplexitätswert ermitteln und an die Sprachdialogeinrichtung übertragen.

Ergänzend oder alternativ ist es auch möglich, dass die Unterbrechungsbedingung Signale mehrerer mit der Sprachdialogeinrichtung verbundener Einrichtungen auswertet, wobei der Komplexitätswert in Abhängigkeit der verbundenen Einrichtung oder der verbundenen Einrichtungen bestimmt wird, die das Signal gibt bzw. die das Signal geben, das bzw. die zur Erfüllung der Unterbrechungsbedingung führt bzw. führen. So ist beispielsweise zu erwarten, dass ein Fahrer nach Ausgabe einer Navigationsanweisung durch ein Navigationssystem weniger von einem vorangehenden Dialog abgelenkt ist als nach einem Telefonat. Damit kann beispielsweise ein höherer Komplexitätswert ermittelt werden, wenn eine Kommunikationseinrichtung ein Unterbrechungssignal überträgt, als wenn ein Navigationssystem ein Unterbrechungssignal überträgt.

Der Komplexitätswert kann jedoch auch in Abhängigkeit des Dialogs selbst bestimmt werden. So kann der Komplexitätswert in Abhängigkeit der zu erfassenden Informationen und/oder wenigstens einer der bereits erfassten Informationen bestimmt werden. Dabei kann insbesondere ausgewertet werden, welches System durch den Dialog gesteuert werden soll, oder ob mehrmals ähnliche Informationen, beispielsweise die Telefonnummern von mehreren Personen oder Ähnliches angegeben werden sollen.

Daneben betrifft die Erfindung eine Sprachdialogeinrichtung für ein Kraftfahrzeug, die zur Durchführung des erfindungsgemäßen Verfahrens ausgebildet ist und die eine Spracheingabeeinrichtung zur Erfassung der Spracheingabedaten und eine Sprachausgabeeinrichtung zur Sprachausgabe umfasst.

Zudem betrifft die Erfindung ein Kraftfahrzeug, das eine erfindungsgemäße Sprachdialogeinrichtung umfasst.

Das Kraftfahrzeug kann dabei wenigstens ein Fahrzeugsystem umfassen, das bei Erfüllung einer Signalbedingung ein Unterbrechungssignal an die Sprachdialogeinrichtung gibt, wobei bei Gabe des Unterbrechungssignals die Unterbrechungsbedingung erfüllt ist. Dabei können insbesondere mehrere Fahrzeugsysteme vorgesehen sein, die entsprechende Unterbrechungssignale übermitteln können. In diesem Fall kann vorteilhaft jedem der Fahrzeugsysteme ein Komplexitätswert zugeordnet sein, in dessen Abhängigkeit bei Wiederaufnahme des Dialogs die Verbosität der Zusammenfassungsausgabe, also insbesondere, welche der erfassten Informationen diese umfasst, und die Entscheidung, ob eine Zusammenfassungsausgabe generiert und ausgegeben wird, angepasst werden.

Das weitere Fahrzeugsystem kann insbesondere eine Kommunikationseinrichtung, ein Radio, ein eine Verkehrssituation auswertendes Fahrerassistenzsystem oder ein Navigationssystem sein.

Ein eine Verkehrssituation auswertendes Fahrerassistenzsystem kann dabei ausgebildet sein, bei Gabe des Unterbrechungssignals zusätzlich einen Einrichtungskomplexitätswert in Abhängigkeit der Verkehrssituation zu bestimmen. Damit kann das Generieren einer Zusammenfassungsausgabe sowie der konkrete Inhalt der Zusammenfassungsausgabe, insbesondere die Menge der darin umfassten Informationen und die Verbosität in Abhängigkeit einer erfassten Verkehrssituation angepasst werden.

Weitere Vorteile und Einzelheiten ergeben sich aus den folgenden Ausführungsbeispielen und den zugehörigen Zeichnungen. Dabei zeigen:
- Fig. 1: schematisch ein Ablaufdiagramm eines Ausführungsbeispiels des erfindungsgemäßen Verfahrens,
- Fig. 2: schematisch ein Ablaufdiagramm zu Generierung und Sprachausgabe der Zusammenfassungsausgabe im in Fig. 1 gezeigten Verfahren,
- Fig. 3: schematisch ein Ablaufdiagramm des Erfassens der Unterbrechungsbedingung sowie der Reaktion auf Vorliegen der Unterbrechungsbedingung im in Fig. 1 gezeigten Verfahren, und
- Fig. 4: schematisch ein erfindungsgemäßes Kraftfahrzeug umfassend eine erfindungsgemäße Sprachdialogeinrichtung.

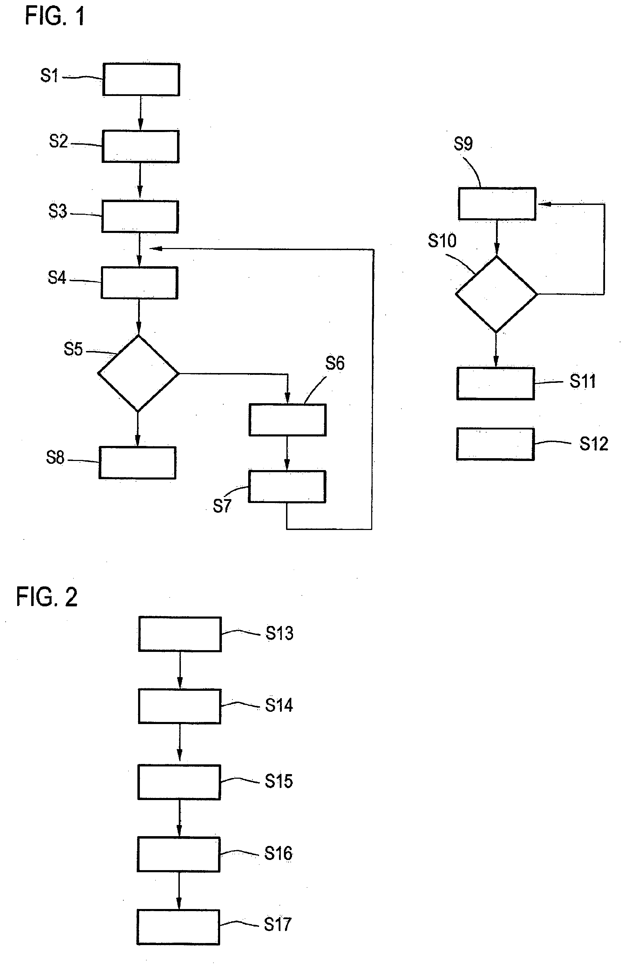

Fig. 1 zeigt schematisch ein Ablaufdiagramm eines Verfahrens zur Erfassung wenigstens zweier zu erfassender Informationen mit zu verknüpfendem Informationsgehalt. Dabei werden im gezeigten Verfahren drei Abläufe parallel durchgeführt. Im ersten dieser Abläufe, der die Schritte S1 bis S8 umfasst, erfolgt die grundsätzliche Dialogführung durch eine Sprachdialogeinrichtung. Ein derartiger Dialog umfasst Sprachausgaben durch die Spracheinrichtung, typischerweise Fragen an einen Benutzer, und Spracheingaben eines Benutzers, die einen Dialog wählen, eine Dialogführung beeinflussen und/oder Informationen in die Sprachdialogeinrichtung eingeben. Parallel hierzu wird in den Schritten S9 bis S11 laufend überprüft, ob eine Wiederholungsbedingung erfüllt ist und bei Vorliegen der Wiederholungsbedingung wird eine natürlich sprachliche Zusammenfassungsausgabe generiert und an den Benutzer als Sprachausgabe ausgegeben. Als dritter Vorgang wird zu den beiden weiteren Vorgängen parallel in Schritt S12 überprüft, ob eine Unterbrechungsbedingung erfüllt ist und bei Erfülltsein dieser Unterbrechungsbedingung der erste Vorgang mit den Schritten S1 bis S8 unterbrochen und unter Umständen später wieder aufgenommen.

Zunächst wird der erste Vorgang umfassend die Schritte S1 bis S8 beschrieben. Dabei ist zu beachten, dass dieser Vorgang jederzeit durch einen der weiteren Vorgänge unterbrochen und nach erfolgter Unterbrechung unter Umständen fortgesetzt werden kann. In Schritt S1 werden zunächst Spracheingabedaten erfasst. So umfasst die Sprachdialogeinrichtung eine Spracheingabeeinrichtung, beispielsweise ein oder mehrere Mikrofone. Die akustisch erfassten Sprachdaten werden zunächst digitalisiert und in einer Speichereinrichtung gespeichert.

In Schritt S2 wird ein Spracherkennungsalgorithmus auf die in Schritt S1 erfassten Spracheingabedaten angewendet. Dabei wird ermittelt, ob zumindest eine der zu erfassenden Informationen in den Spracheingabedaten enthalten ist. Falls dies nicht der Fall ist, wird die Erfassung von Spracheingabedaten solange fortgesetzt bis wenigstens eine Information in den erfassten Spracheingabedaten enthalten ist. Die eine oder mehreren in den erfassten Spracheingabedaten enthaltene Information bzw. enthaltenen Informationen werden anschließend gespeichert. Dabei erfolgt die Speicherung der Informationen in einer ontologie-basierten Datenbank. Jeder der Informationen ist damit eine Bedeutung im Rahmen des durch die Sprachdialogeinrichtung geführten Dialogs zugeordnet. Die Bedeutungszuordnung erfolgt durch Hinzufügen von Metadaten zu den erfassten Informationen.

In Schritt S3 erfolgt eine Bestimmung der adressierten Funktion. Das Verfahren kann zur Steuerung mehrerer Einrichtungen genutzt werden und jede dieser Einrichtungen kann unterschiedliche Eingabemöglichkeiten haben. So kann ein Sprachdialog, der eine Kommunikationseinrichtung steuert, beispielsweise einen Anruf auslösen, einen Eintrag zu einem Telefonbuch hinzufügen, oder einen solchen Eintrag editieren oder durch Spracherkennung eine Textnachricht verfassen. Ebenso kann ein Terminplaner durch die Sprachdialogeinrichtung gesteuert werden, wobei durch Sprachdialoge neue Termine angelegt, Terminlisten ausgegeben oder Einstellungen geändert werden können. Zur Steuerung eines Navigationssystems kann beispielsweise eine Zieladresse für die Navigation eingegeben werden oder nach der nächstliegenden Tankstelle gesucht werden. In Schritt S3 wertet die Sprachdialogeinrichtung damit die in Schritt S2 extrahierten Informationen aus und bestimmt sowohl die weiteren zu erfassenden Informationen als auch die Sprachausgaben der Sprachdialogeinrichtung, die, insbesondere als Fragen, zwischen den Erfassungen der Informationen ausgegeben werden.

In Schritt S4 wird die in Schritt S2 extrahierte Information bzw. die in Schritt S2 extrahierten Informationen gespeichert. Dabei wird zu den Informationen die in Schritt S2 beschriebene Metainformation gespeichert, womit eine ontologie-basierte Datenstruktur gebildet wird, in der nicht nur die extrahierten Informationen sondern auch ein Bedeutungsgehalt der extrahierten Informationen sowie ein Zusammenhang zwischen den Informationen gespeichert ist.

In Schritt S5 wird überprüft, ob bereits alle zu erfassenden Informationen erfasst wurden. Die Anzahl und Art der zu erfassenden Informationen ist durch den in Schritt S3 bestimmten Funktion festgelegt. Wie dort erläutert, ist es möglich, dass die Zahl der zu erfassenden Informationen und die Art der zu erfassenden Informationen in weiteren Erfassungsschritten angepasst wird.

Sind noch nicht alle zu erfassenden Informationen erfasst, so wird in Schritt S6 eine Sprachausgabe durch die Sprachdialogeinrichtung ausgegeben, die vom Benutzer wenigstens eine weitere der zu erfassenden Informationen abfragt. Damit wird durch abwechselndes Abfragen von Informationen und Erfassen der entsprechenden Informationen ein Dialog aufgebaut. Das erneute Erfassen und Auswerten der weiteren Information erfolgt anschließend in Schritt S7, ebenso wie zu Schritt S1 und Schritt S2 erläutert. Anschließend wird in Schritt S4 die neu erfasste Information ebenfalls mit zugehöriger Metainformation gespeichert und in Schritt S5 wird erneut überprüft, ob nun alle zu erfassenden Informationen erfasst sind. Dies wird solange wiederholt, bis in Schritt S5 ermittelt wird, dass nun alle zu erfassenden Informationen erfasst sind. In diesem Fall endet das Verfahren in Schritt S8, wonach eine Steuerung von zu steuernden Komponenten, ein Speichern von durch den Sprachdialog aufgenommenen Informationen oder Ähnliches erfolgen kann.

Neben den oben beschriebenen Schritten S1 bis S8 werden parallel die Schritte S9 bis S11 durchgeführt. In Schritt S9 werden durch die Sprachdialogeinrichtung dabei Eingangsdaten erfasst, die im Rahmen einer Wiederholungsbedingung ausgewertet werden. Dabei handelt es sich insbesondere um die momentan vergangene Zeit zwischen einer letzten Sprachausgabe der Sprachdialogeinrichtung und der Erfassung der zu erfassenden Informationen. Daneben können Signale von Bedienelementen erfasst werden, die bei Betätigung durch einen Benutzer zur Ausgabe einer natürlich sprachlichen Zusammenfassungsausgabe führen. Zusätzlich werden die Spracheingabedaten laufend auf das Vorliegen eines Schlüsselworts untersucht, durch das ein Benutzer eine Generierung einer Zusammenfassungsausgabe und die Sprachausgabe dieser veranlassen kann.

In Schritt S10 wird überprüft, ob die oben genannten Eingangsdaten die Wiederholungsbedingung erfüllen. Die Wiederholungsbedingung ist dabei erfüllt, wenn das Schlüsselwort detektiert wurde, eine Ausgabe einer Zusammenfassungsausgabe durch Betätigen eines Bedienelements durch den Benutzer angefordert wurde oder ein vorgegebenes Zeitintervall überschritten ist. Ist die Wiederholungsbedingung nicht erfüllt, so wird das Verfahren mit Schritt S9 fortgesetzt. Bei Erfüllung der Wiederholungsbedingung wird das Verfahren in Schritt S11 fortgesetzt, in dem eine Zusammenfassungsausgabe generiert und ausgegeben wird. Dies ist mit Bezug auf Fig. 2 genauer erläutert.

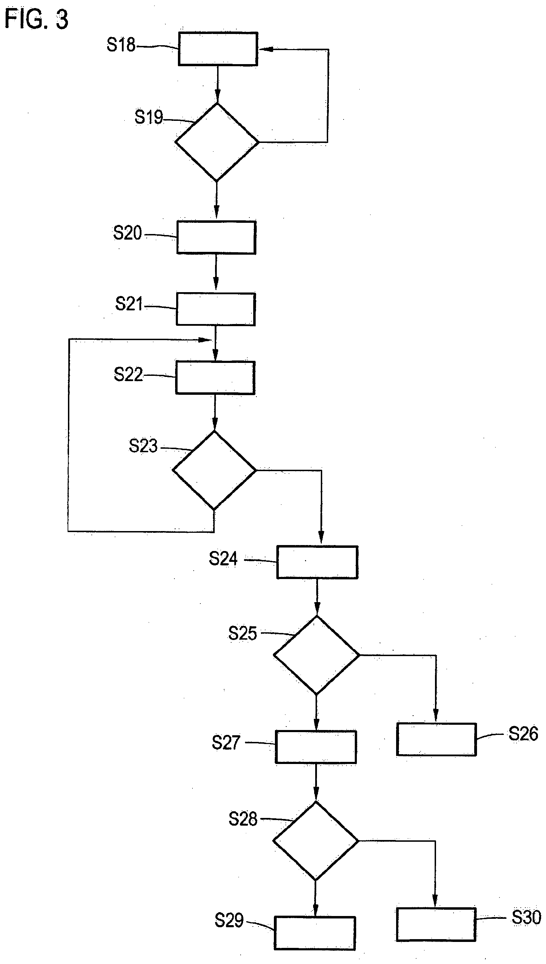

Parallel zu den die Schritte S1 bis S8 bzw. S9 bis S11 umfassenden Abläufen wird in Schritt S12 laufend überprüft, ob eine Unterbrechungsbedingung vorliegt und bei Vorliegen einer Unterbrechungsbedingung die zu Schritten S1 bis S8 beschriebene Dialogführung unterbrochen. Insbesondere werden dabei die Sprachausgabe und die Spracherfassung unterbrochen. Bei nicht mehr vorliegen eines Unterbrechungssignals wird, bevor die Dialogführung fortgesetzt wird, unter Umständen eine natürlich sprachliche Zusammenfassungsausgabe generiert und ausgegeben. Das Vorgehen während Schritt S12 ist mit Bezug auf Fig. 3 genauer erläutert.

Fig. 2 zeigt ein schematisches Ablaufdiagramm zum Generieren und Ausgeben einer natürlich sprachlichen Zusammenfassungsausgabe. Die in Fig. 2 gezeigten Schritte S13 bis S17 bilden gemeinsam den in Fig. 1 gezeigten Schritt S11.

In Schritt S13 werden zunächst Daten erfasst, die die Struktur der Zusammenfassungsausgabe, insbesondere die Anzahl und Auswahl der in der Zusammenfassungsausgabe enthaltenen Informationen sowie die Art der Wiedergabe der Informationen, bestimmen. Dabei wird insbesondere erfasst, wodurch die Generierung der Zusammenfassungsausgabe ausgelöst wurde. Neben einem Auslösen durch Erreichen des Schrittes S11 in Fig. 1 kann auch innerhalb des Schrittes S12 bei beenden einer Unterbrechung des Sprachdialogs eine Zusammenfassungsausgabe generiert und ausgegeben werden. Die Art des Aufrufs bestimmt insbesondere die weiteren berücksichtigten Daten zur Bestimmung der Verbosität der Zusammenfassungsausgabe. Die Verbosität wird dabei bei einem Aufruf aufgrund einer Unterbrechung in Abhängigkeit der Zeitdauer der Unterbrechung und des wie in Fig. 3 erläutert bestimmten Komplexitätswertes bestimmt. Bei einem Aufruf durch Erreichen des Schrittes S11 wird berücksichtigt, welche der mit Bezug auf Schritt S9 und S10 beschriebenen Wiederholungsbedingungen erfüllt wurde.

In Schritt S14 wird bestimmt, welche der erfassten Informationen im Rahmen der Zusammenfassungsausgabe wiedergegeben werden. Hierzu wird aus den in Schritt S13 bestimmten Werten ein gemeinsamer Wert bestimmt, der die Verbosität bestimmt und in Abhängigkeit dessen wird eine von mehreren vorgegebenen Strukturen für eine Zusammenfassungsausgabe ausgewählt. Dabei erfolgt eine Vorauswahl einer Gruppe von Strukturen von Zusammenfassungsausgaben in Abhängigkeit der Art und Anzahl der erfassten Informationen und der adressierten Funktion. Innerhalb dieser Gruppe wird anschließend in Abhängigkeit des bestimmten gemeinsamen Wertes eine der Strukturen ausgewählt. Eine Struktur der Zusammenfassungsausgabe umfasst Informationen, welche der erfassten Informationen in welcher Form an welcher Stelle ausgegeben werden und zudem typischerweise zusätzliche Phrasen zur Verbindung der Informationen.

In Schritt S15 wird die Zusammenfassungsausgabe generiert, indem die erfassten Informationen entsprechend der zuvor ermittelten Struktur der Zusammenfassungsausgabe in die Struktur eingefügt werden, um eine natürlich sprachliche Zusammenfassungsausgabe zu erhalten.

Dies soll am Beispiel der Eingabe eines Navigationsziels erläutert werden. Bei diesem Dialogtyp sind als zu erfassende Informationen der Dialogtyp, eine Stadt, eine Straße und eine Hausnummer vorgesehen. Dabei wurden bereits alle Informationen abgesehen von der Hausnummer erfasst. Wurde als Stadt "München" erfasst und als Straße "Innere Wiener Straße" so kann als ausführliche Zusammenfassungsausgabe generiert werden "Wir waren gerade dabei eine Zieleingabe nach München, Innere Wiener Straße zu erstellen". Durch das "Zieleingabe" wird die adressierte Funktion, nämlich die Bestimmung eines Navigationsziels, angegeben, und durch "München" und "Innere Wiener Straße" der Ort sowie die Straße. Es werden damit alle drei bisher erfassten Informationen wiedergegeben. Abhängig von den genannten Parametern, insbesondere der Zeitdauer und dem Komplexitätswert, kann es jedoch vorteilhaft sein, eine kürzere Zusammenfassungsausgabe zu generieren. Die Zusammenfassungsausgabe kann dabei auch gemeinsam mit der Frage nach der nächsten zu erfassenden Information generiert werden. Damit könnte beispielsweise als Zusammenfassungsausgabe der Satz "Zu welcher Hausnummer in der Innere Wiener Straße soll gefahren werden?" generiert werden.

Die Zusammenfassungsausgabe wird anschließend in Schritt S16 über eine Sprachausgabeeinrichtung ausgegeben und in Schritt S17 wird zu dem als Schritte S1 bis S8 in Fig. 1 gezeigten Ablauf zurückgekehrt. Dabei kann insbesondere zu dem Punkt in das Verfahren zurückgekehrt werden, zu dem die letzte Sprachausgabe durch die Sprachdialogeinrichtung erfolgte, also Schritt S6 des jeweiligen Durchlaufs der Schleife S4 bis S7. Wurde die entsprechende Frage schon in die Zusammenfassung aufgenommen, so wird das Verfahren mit Schritt S7 fortgesetzt, ansonsten mit Schritt S6. Parallel dazu wird die Ausführung der Schritte S9 bis S11 wieder in Schritt S9 begonnen.

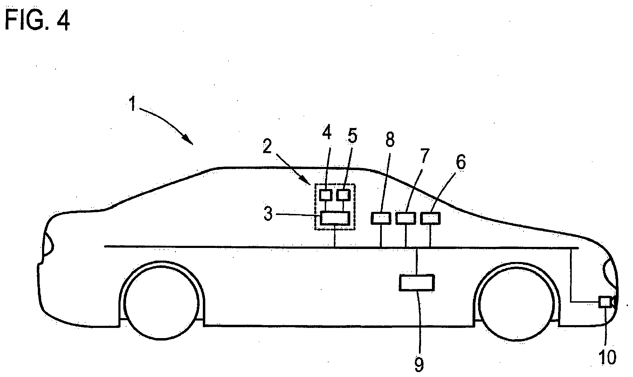

Fig. 3 zeigt ein detailliertes Ablaufdiagramm des Schrittes S12. In diesem werden zunächst in Schritt S18 die Signale weiterer Kraftfahrzeugsysteme erfasst. Dies können, wie in Fig. 4 gezeigt, insbesondere ein Navigationssystem 8, eine Kommunikationseinrichtung 7, ein Radio 6 und/oder ein Fahrerassistenzsystem 9, das eine Fahrsituation des Kraftfahrzeugs 1 auswertet, sein.

In Schritt S19 wird ermittelt, ob eine Unterbrechungsbedingung erfüllt ist. Eine Unterbrechungsbedingung ist in dem Fall erfüllt, wenn wenigstens eines der Kraftfahrzeugsysteme, deren Signale in Schritte S18 erfasst wurden, ein Unterbrechungssignal sendet. Ergänzend oder alternativ könnten in Schritt S19 auch weitere Unterbrechungsbedingungen geprüft werden, beispielsweise ob ein weiterer Passagier des Kraftfahrzeugs spricht, ob der Benutzer spricht ohne den Sprachdialog fortzusetzen und ob eine gewisse Mindestzeit seit der letzten Sprachausgabe der Sprachdialogeinrichtung vergangen ist während der keine Information erfasst wurde. Liegt keine Unterbrechungsbedingung vor, so wird das Verfahren ab Schritt S18 fortgesetzt.

In Schritt S20 wird eine Zeiterfassung gestartet bzw. ein Zeitzähler zurückgesetzt. Der Zeitzähler dient im gezeigten Verfahren dazu, bei Ende der Unterbrechung, also bei Entfallen der Unterbrechungsbedingung, die Gesamtlänge der Unterbrechung des Sprachdialogs zu erfassen und in Abhängigkeit dieser das Generieren und Ausgeben der Zusammenfassungsausgabe zu steuern.

In Schritt S21 wird die Durchführung des Dialogs, also die Durchführung der Schritte S1 bis S8 angehalten und der momentane Dialogzustand wird gespeichert. Hierzu werden zumindest die bereits erfassten Informationen sowie die zugehörigen Metainformationen gespeichert. Ergänzend können auch die letzte oder weitere vorangehende Sprachausgaben durch die Sprachdialogeinrichtung, die adressierte Funktion und/oder der Schritt innerhalb eines Dialogs, an dem sich der Dialog momentan befindet gespeichert werden. Je nach konkreter Ausführung der Speicherdialogeinrichtung kann Punkt S21 unter Umständen unterbleiben, da ein Dialogzustand unter Umständen ohnehin im Speicher vorliegt. Da jedoch unter Umständen während der Unterbrechung ein weiterer Dialog durchgeführt werden könnte, ist ein separates Speichern des Dialogzustandes in der Regel vorteilhaft.

In Schritt S22 werden erneut die Signale weiterer mit der Sprachdialogeinrichtung verbundener Einrichtungen erfasst und in Schritt S23 wird erneut überprüft, ob die Unterbrechungsbedingung erfüllt ist. Die Schritte S22 und S23 entsprechen damit den Schritten S18 und S19. Dabei erfolgt jedoch eine Wiederholung der Schritte S22 und S23, solange die Unterbrechungsbedingung erfüllt ist. Sobald die Unterbrechungsbedingung nicht mehr erfüllt ist, wird das Verfahren mit Schritt S24 fortgesetzt. In Schritt S24 wird zunächst der in Schritt S20 gestartete Timer gestoppt bzw. es wird der Wert des Timers ausgelesen. Damit wird in Schritt S24 die Zeitdauer erfasst, für die die Unterbrechung vorlag.

Anschließend wird in Schritt S25 überprüft, ob der in Schritt S21 unterbrochene Dialog fortgesetzt werden soll. Dabei wird die Zeitdauer der Unterbrechung ausgewertet. Ist die Zeitdauer größer als ein vorgegebener Grenzwert, so wird der Dialog in Schritt S26 abgebrochen und kann durch den Benutzer in Schritt S1 neu gestartet werden. Auch andere Bedingungen können zum Abbruch des Dialoges führen. So sollte ein Dialog typischerweise in einem Kraftfahrzeug nicht fortgesetzt werden, wenn ein Benutzer zwischen Beginn der Unterbrechung und Ende der Unterbrechung das Fahrzeug verlassen hat. Es ist auch möglich, dass weitere Bedieneingaben eines Benutzers einen Dialog hinfällig machen. So kann beispielsweise eine Stationswahl nicht durchgeführt werden, wenn der Benutzer zuvor das Radio abgeschaltet hat.

Wenn in Schritt S25 ermittelt wurde, dass der Dialog fortgesetzt werden soll, so wird in Schritt S27 ein Komplexitätswert bestimmt. Der Komplexitätswert ist ein Maß für die Belastung eines Nutzers durch das die Unterbrechung bedingende Ereignis. Der Komplexitätswert wird dabei in Abhängigkeit der verbundenen Einrichtung bestimmt, die das Signal gibt, das zur Erfüllung der Unterbrechungsbedingung führt. Alternativ oder ergänzend wäre es möglich, den Komplexitätswert in Abhängigkeit eines durch die verbundene Einrichtung ermittelten Einrichtungskomplexitätswerts zu ermitteln oder die zu erfassenden oder wenigstens eine der bereits erfassten Informationen bei der Bestimmung des Komplexitätswerts zu berücksichtigen.

In Schritt S28 wird daraufhin die Wiederholungsbedingung ausgewertet und in Abhängigkeit der in Schritt S24 erfassten Zeitdauer und des in Schritt S27 bestimmten Komplexitätswertes ermittelt, ob eine natürlich sprachliche Zusammenfassungsausgabe generiert und als Sprachausgabe ausgegeben werden soll. Dabei wird in Abhängigkeit der Zeitdauer und des Komplexitätswertes ein Wert bestimmt, der mit einem vorgegebenen Grenzwert verglichen wird. Die Bestimmung des Wertes kann dabei durch Nutzung einer zweidimensionalen Wertetabelle, Berechnung einer gewichteten Summe, Produktbildung oder andere Funktionen, die von der Zeitdauer, dem Komplexitätswert sowie optional weiteren Parametern abhängen, bestimmt werden.

Wird in Schritt S28 ermittelt, dass die Wiederholungsbedingung nicht erfüllt ist, so wird in Schritt S30 der Dialogzustand wiederhergestellt. Dabei werden die in Schritt S21 gespeicherten Werte wieder geladen. Der Dialogzustand wird dabei so verändert, dass der Dialog mit dem letzten vorangehenden Schritt S6 aus Fig. 1, also mit der letzten vorangehenden Sprachausgabe durch die Sprachdialogeinrichtung fortgesetzt wird.

Wird in Schritt S28 wird ermittelt, dass eine natürlich sprachliche Zusammenfassungsausgabe generiert und als Sprachausgabe ausgegeben werden soll, erfolgt dies in Schritt S29. Die Generierung und Ausgabe der Zusammenfassungsausgabe erfolgt wie zu Fig. 2 erläutert. Wurde in Schritt S21 ein Dialogzustand gesichert, so erfolgt vor dem Rücksprung, wie er mit Bezug auf Schritt S17 in Fig. 2 erläutert ist, eine Wiederherstellung des Dialogzustandes.

Fig. 4 zeigt schematisch ein Kraftfahrzeug 1, umfassend eine Sprachdialogeinrichtung 2, die zur Durchführung des oben beschriebenen Verfahrens ausgebildet ist. Die Sprachdialogeinrichtung 2 umfasst dabei eine Steuereinrichtung 3 sowie eine Spracheingabeeinrichtung 4, die als Mikrofon mit zugeordnetem Analog-Digitalwandler ausgebildet ist, sowie eine Sprachausgabeeinrichtung 5, die als Lautsprecher mit zugeordnetem Digital-Analogwandler ausgebildet ist. Die Steuereinrichtung 3 ist über einen Fahrzeugbus, beispielsweise einen CAN-Bus, mit weiteren Komponenten des Kraftfahrzeugs verbunden. Die weiteren Komponenten sind ein Radio 6, eine Kommunikationseinrichtung 7, ein Navigationsgerät 8 und ein Fahrerassistenzsystem 9, das eine Verkehrssituation auswertet, die durch Sensoren des Kraftfahrzeugs, von denen beispielhaft die Kamera 10 gezeigt ist, erfasst wird. Durch die Sprachdialogeinrichtung 2 sind das Radio 6, die Kommunikationseinrichtung 7 und das Navigationsgerät 8 steuerbar. So können dem Navigationsgerät 8 Navigationsziele vorgegeben werden, für Radio 6 durch Sprachkommandos eine Senderauswahl, eine Lautstärkeauswahl und weitere Bedienfunktionen durchgeführt werden und die Kommunikationseinrichtung 7 insbesondere gesteuert werden um Anrufe durchzuführen oder entgegenzunehmen. In die Kommunikationseinrichtung 7 ist zudem ein Adressbuch und ein Terminplaner integriert, wobei ein Hinzufügen und Editieren von Einträgen des Adressbuches und des Terminplaners ebenfalls durch Sprachkommandos durch die Sprachdialogeinrichtung 2 möglich ist.

Für einige der Sprachsteuerungen sollen mehrere Informationen mit zu verknüpfendem Informationsgehalt erfasst werden. Soll beispielsweise ein neuer Eintrag in das in die Kommunikationseinrichtung 7 integrierte Adressbuch eingetragen werden, so sollen ein Vorname, ein Nachname, eine Adresse, die wiederum aus Straße, Hausnummer und Ort besteht, sowie wenigstens eine Telefonnummer erfasst werden. Um derart komplexe Eingaben zu erfassen, kann die Sprachdialogeinrichtung 2 jeweils nach Erfassen von Informationen durch eine Spracheingabe des Benutzers fehlende weitere Informationen vom Benutzer durch eine Sprachausgabe erfragen.

Dieser mehrteilige Dialog kann jedoch in Abhängigkeit von Signalen der weiteren Fahrzeugeinrichtungen unterbrochen werden. So sollte ein Sprachdialog unterbrochen werden, wenn das Navigationssystem 8 eine Navigationsanweisung ausgibt, durch das Radio 6 eine Verkehrsmeldung empfangen und ausgegeben wird, an der Kommunikationseinrichtung 7 ein Anruf eingeht und/oder entgegengenommen wird oder das Fahrerassistenzsystem eine komplexe Verkehrssituation erfasst, die die vollständige Aufmerksamkeit des Fahrers erfordert. Daher ist vorgesehen, dass das Radio 6, die Kommunikationseinrichtung 7, das Navigationssystem 8 sowie das Fahrerassistenzsystem 9 über den Fahrzeugbus Unterbrechungssignale an die Sprachdialogeinrichtung 2 übermitteln können. Die Sprachdialogeinrichtung ist dabei ausgebildet, wie mit Bezug auf Fig. 1 bis Fig. 3 erläutert, nach Wegfall des Unterbrechungssignals und damit Abschluss einer derartigen Unterbrechung eine natürlich sprachliche Zusammenfassungsausgabe zu generieren und als Sprachausgabe auszugeben, die den bisherigen Dialog zusammenfasst. Dabei wird die Verbosität der Zusammenfassungsausgabe in Abhängigkeit der Zeitdauer der Unterbrechung sowie eines Komplexitätswertes angepasst. Der Komplexitätswert wird dabei in Abhängigkeit davon bestimmt, welche der weiteren Einrichtungen ein Unterbrechungssignal gesendet hat. Dem Navigationssystem 8, der Kommunikationseinrichtung 7 und dem Radio 6 sind dabei feste Komplexitätswerte zugewiesen. Das Fahrerassistenzsystem 9 ermittelt in Abhängigkeit der Verkehrssituation eigenständig einen Einrichtungskomplexitätswert und übermittelt ihn mit dem Unterbrechungssignal an die Sprachdialogeinrichtung 2.

Ergänzend kann die Sprachdialogeinrichtung 2 auch dann eine natürlich sprachliche Zusammenfassungsausgabe generieren und als Sprachausgabe ausgeben, wenn ein entsprechendes Sprachkommando eines Benutzers erfasst wurde.

## Patentansprüche

1. Verfahren zur Erfassung wenigstens zweier zu erfassender Informationen mit zu verknüpfendem Informationsgehalt durch eine Sprachdialogeinrichtung (2), wobei zwischen den Erfassungen der Informationen jeweils eine Sprachausgabe durch die Sprachdialogeinrichtung (2) erfolgt, wobei die Informationen jeweils durch Erfassung von natürlichsprachlichen Spracheingabedaten und Extraktion der jeweiligen Information aus den Spracheingabedaten durch einen Spracherkennungsalgorithmus erfasst werden, wobei bei Erfüllung einer Wiederholungsbedingung durch die Sprachdialogeinrichtung (2) eine natürlichsprachliche Zusammenfassungsausgabe generiert und als Sprachausgabe ausgegeben wird, die eine natürlichsprachliche Wiedergabe wenigstens einer bereits erfassten Information oder eines Teils dieser Information oder eine aus dieser Information abgeleitete Information umfasst, wobei, wenn zum Zeitpunkt der Erfüllung der Wiederholungsbedirigung bereits mehr als eine der zu erfassenden Informationen erfasst worden ist, durch die Sprachdialogeinrichtung (2) in Abhängigkeit eines Wiederholungsparameters für jede der bereits erfassten Informationen bestimmt wird, ob eine natürlichsprachliche Wiedergabe dieser Information oder eines Teils dieser Information oder einer aus dieser Information abgeleiteten Information in die Zusammenfassung aufgenommen wird oder nicht, wobei eine notwendige Bedingung zur Erfüllung der Wiederholungsbedingung ist, dass eine zunächst erfüllte Unterbrechungsbedingung, während deren Erfüllung die Erfassung der Informationen unterbrochen wird, nicht mehr erfüllt ist,
**dadurch gekennzeichnet,**
**dass** durch die Sprachdialogeinrichtung (2) die Zeitdauer, für die die Unterbrechungsbedingung vorliegt, erfasst wird, wonach der Wiederholungsparameter in Abhängigkeit von dieser Zeitdauer bestimmt wird und/oder dass durch die Sprachdialogeinrichtung (2) bei Erfüllung der Unterbrechungsbedingung ein Komplexitätswert bestimmt oder erfasst wird, der ein Maß für die Belastung eines Nutzers durch das die Unterbrechung bedingende Ereignis ist, wonach der Wiederholungsparameter in Abhängigkeit von diesem Komplexitätswert bestimmt wird.

2. Verfahren nach Anspruch 1,
**dadurch gekennzeichnet,**
**dass** die Wiederholungsbedingung zusätzlich die Anzahl der bereits erfassten Informationen und/oder die bereits erfassten Informationen selbst auswertet.

3. Verfahren nach Anspruch 1 oder 2, wobei der Wiederholungsparameter in Abhängigkeit des Komplexitätswerts bestimmt wird,
**dadurch gekennzeichnet,**
**dass** die Unterbrechungsbedingung ein Signal einer mit der Sprachdialogeinrichtung (2) verbundenen Einrichtung auswertet, wobei die verbundene Einrichtung zusätzlich einen Einrichtungskomplexitätswert übermittelt, in Abhängigkeit dessen der Komplexitätswert bestimmt wird.

4. Verfahren nach einem der vorangehenden Ansprüche, wobei der Wiederholungsparameter in Abhängigkeit des Komplexitätswerts bestimmt wird,
**dadurch gekennzeichnet,**
**dass** die Unterbrechungsbedingung Signale mehrerer mit der Sprachdialogeinrichtung (2) verbundener Einrichtungen auswertet, wobei der Komplexitätswert in Abhängigkeit der verbundenen Einrichtung oder der verbundenen Einrichtungen bestimmt wird, die das Signal gibt bzw. die das Signal geben, das bzw. die zur Erfüllung der Unterbrechungsbedingung führt bzw. führen.

5. Verfahren nach einem der vorangehenden Ansprüche,
**dadurch gekennzeichnet,**
**dass** der Komplexitätswert in Abhängigkeit der zu erfassenden Informationen oder wenigstens einer der bereits erfassten Informationen bestimmt wird.

6. Sprachdialogeinrichtung für ein Kraftfahrzeug (1),
**dadurch gekennzeichnet,**
**dass** sie zur Durchführung eines Verfahrens nach einem der vorangehenden Ansprüche ausgebildet ist und eine Spracheingabeeinrichtung (4) zur Erfassung der Spracheingabedaten und eine Sprachausgabeeinrichtung (5) zur Sprachausgabe umfasst.

7. Kraftfahrzeug,
**dadurch gekennzeichnet,**
**dass** es eine Sprachdialogeinrichtung (2) nach Anspruch 6 umfasst.

8. Kraftfahrzeug nach Anspruch 7,
**dadurch gekennzeichnet,**
**dass** es wenigstens ein Fahrzeugsystem umfasst, das bei Erfüllung einer Signalbedingung ein Unterbrechungssignal an die Sprachdialogeinrichtung (2) gibt, wobei bei Gabe des Unterbrechungssignal die Unterbrechungsbedingung erfüllt ist.

9. Kraftfahrzeug nach Anspruch 8,
**dadurch gekennzeichnet,**
**dass** das weitere Fahrzeugsystem eine Kommunikationseinrichtung (7), ein Radio (6), ein eine Verkehrssituation auswertendes Fahrerassistenzsystem (9) oder ein Navigationssystem (8) ist.

10. Kraftfahrzeug nach Anspruch 9, wobei das weitere Fahrzeugsystem ein eine Verkehrssituation auswertendes Fahrerassistenzsystem (9) ist,
**dadurch gekennzeichnet,**
**dass** das eine Verkehrssituation auswertendes Fahrerassistenzsystem (9) ausgebildet ist, bei Gabe des Unterbrechungssignals zusätzlich einen Einrichtungskomplexitätswert in Abhängigkeit der Verkehrssituation zu bestimmen.

## Claims

1. Method for detecting at least two items of information which are intended to be detected with information content which is intended to be linked by means of a speech dialogue device (2), wherein between the detections of the items of information a speech output is carried out by the speech dialogue device (2), wherein the items of information are detected in each case by detecting natural language speech input data and extracting the respective information from the speech input data by means of a speech recognition algorithm, wherein, when a repetition condition is complied with by the speech dialogue device (2), a natural language summary output is generated and output as speech output which comprises a natural language reproduction of at least one item of information which has already been detected or a portion of this information or an item of information which is derived from this information, wherein if at the time of the compliance with the repetition condition more than one of the items of information which are intended to be detected have already been detected, using the speech dialogue device (2) in accordance with a repetition parameter for each of the items of information which have already been detected, it is determined whether a natural language reproduction of this information or a portion of this information or an item of information derived from this information is included in the summary or not, wherein a necessary condition to comply with the repetition condition is that an interruption condition, which has initially been complied with and during the compliance of which the detection of the information has been interrupted, is no longer complied with,
**characterised in that**
using the speech dialogue device (2) the period of time for which the interruption condition is present is established, according to which the repetition parameter is determined in accordance with this period of time,
and/or **in that** using the speech dialogue device (2), when the interruption condition is complied with, there is determined or detected a complexity value which is a measure for the loading of a user by the event which brings about the interruption and according to which the repetition parameter is determined in accordance with this complexity value.

2. Method according to claim 1,
**characterised in that**
the repetition condition itself further evaluates the number of items of information which have already been detected and/or the items of information which have already been detected.

3. Method according to claim 1 or 2, wherein the repetition parameter is determined in accordance with the complexity value,
**characterised in that**
the interruption condition evaluates a signal of a device which is connected to the speech dialogue device (2), wherein the device which is connected additionally transmits a device complexity value, in accordance with which the complexity value is determined.

4. Method according to any one of the preceding claims, wherein the repetition parameter is determined in accordance with the complexity value,
**characterised in that**
the interruption condition evaluates signals of a plurality of devices which are connected to the speech dialogue device (2), wherein the complexity value is determined in accordance with the connected device or the connected devices which produce(s) the signal which lead(s) to the interruption condition being complied with.

5. Method according to any one of the preceding claims,
**characterised in that**
the complexity value is determined in accordance with the information to be detected or at least one of the items of information which have already been detected.

6. Speech dialogue device for a motor vehicle (1),
**characterised in that**
it is constructed to carry out a method according to any one of the preceding claims and comprises a speech input device (4) for detecting the speech input data and a speech output device (5) for speech output.

7. Motor vehicle,
**characterised in that**
it comprises a speech dialogue device (2) according to claim 6.

8. Motor vehicle according to claim 7,
**characterised in that**
it comprises at least one vehicle system which, when a signal condition is complied with, transmits an interruption signal to the speech dialogue device (2), wherein, when the interruption signal is transmitted, the interruption condition is complied with.

9. Motor vehicle according to claim 8,
**characterised in that**
the additional vehicle system is a communication device (7), a radio (6), a driver assistance system (9) which evaluates a traffic situation or a navigation system (8).

10. Motor vehicle according to claim 9, wherein the additional vehicle system is a driver assistance system (9) which evaluates a traffic situation,
**characterised in that**
the driver assistance system (9) which evaluates a traffic situation is constructed to additionally determine a device complexity value in accordance with the traffic situation when the interruption signal is transmitted.

## Revendications

1. Procédé de détection d'au moins deux informations à détecter avec un contenu d'informations à relier par un dispositif de dialogue vocal (2), dans lequel respectivement une sortie vocale est effectuée par le dispositif de dialogue vocal (2) entre les détections des informations, dans lequel les informations sont détectées respectivement par détection des données d'entrée vocale en langue naturelle et extraction des informations respectives des données d'entrée vocale par un algorithme de reconnaissance vocale, dans lequel lors du remplissage d'une condition de répétition par le dispositif de dialogue vocal (2) une sortie de résumé en langue naturelle est générée et est émise comme sortie vocale qui comporte un rendu en langue naturelle au moins des informations déjà détectées ou d'une partie de ces informations ou des informations dérivées de ces informations, dans lequel lorsqu'au moment du remplissage de la condition de répétition déjà plus d'une des informations à détecter a été détectée, en fonction d'un paramètre de répétition pour chacune des informations déjà détectées il est déterminé par le dispositif de dialogue vocal (2) si un rendu en langue naturelle de ces informations ou d'une partie de ces informations ou des informations dérivées de ces informations est enregistré dans le résumé ou pas, dans lequel une condition nécessaire au remplissage de la condition de répétition est qu'une condition d'interruption tout d'abord remplie pendant le remplissage de laquelle la détection des informations est interrompue, n'est plus remplie,
**caractérisé en ce**
**que** la durée pour laquelle la condition d'interruption se présente, est détectée par le dispositif de dialogue vocal (2), selon quoi le paramètre de répétition est déterminé en fonction de cette durée et/ou que par le dispositif de dialogue vocal (2) lors du remplissage de la condition d'interruption une valeur de complexité est déterminée ou détectée, laquelle est une mesure pour la sollicitation d'un utilisateur par l'événement conditionnant l'interruption, selon quoi le paramètre de répétition est déterminé en fonction de cette valeur de complexité.

2. Procédé selon la revendication 1,
**caractérisé en ce**
**que** la condition de répétition évalue elle-même en outre le nombre des informations déjà détectées et/ou les informations déjà détectées.

3. Procédé selon la revendication 1 ou 2, dans lequel le paramètre de répétition est déterminé en fonction de la valeur de complexité,
**caractérisé en ce**
**que** la condition d'interruption évalue un signal d'un dispositif relié au dispositif de dialogue vocal (2), dans lequel le dispositif relié transmet en outre une valeur de complexité de dispositif, en fonction de laquelle la valeur de complexité est déterminée.

4. Procédé selon l'une quelconque des revendications précédentes, dans lequel le paramètre de répétition est déterminé en fonction de la valeur de complexité,
**caractérisé en ce**
**que** la condition d'interruption évalue des signaux de plusieurs dispositifs reliés au dispositif de dialogue vocal (2), dans lequel la valeur de complexité est déterminée en fonction du dispositif relié ou des dispositifs reliés qui donne ou donnent le signal qui mène ou mènent au remplissage de la condition d'interruption.

5. Procédé selon l'une quelconque des revendications précédentes,
**caractérisé en ce**
**que** la valeur de complexité est déterminée en fonction des informations à détecter ou au moins une des informations déjà détectées.

6. Dispositif de dialogue vocal pour un véhicule automobile (1),
**caractérisé en ce**
**qu'**il est réalisé pour la mise en oeuvre d'un procédé selon l'une quelconque des revendications précédentes et comporte un dispositif d'entrée vocale (4) pour la détection des données d'entrée vocale et un dispositif de sortie vocale (5) pour la sortie vocale.

7. Véhicule automobile,
**caractérisé en ce**
**qu'**il comporte un dispositif de dialogue vocal (2) selon la revendication 6.

8. Véhicule automobile selon la revendication 7,
**caractérisé en ce**
**qu'**il comporte au moins un système de véhicule qui donne lors du remplissage d'une condition de signal un signal d'interruption au dispositif de dialogue vocal (2), dans lequel lors du don du signal d'interruption la condition d'interruption est remplie.

9. Véhicule automobile selon la revendication 8,
**caractérisé en ce**
**que** l'autre système de véhicule est un dispositif de communication (7), une radio (6), un système d'assistance au conducteur (9) évaluant une situation de circulation ou un système de navigation (8).

10. Véhicule automobile selon la revendication 9, dans lequel l'autre système de véhicule est un système d'assistance au conducteur (9) évaluant une situation de circulation,
**caractérisé en ce**
**que** le système d'assistance au conducteur (9) évaluant une situation de circulation est réalisé afin de déterminer lors du don du signal d'interruption en outre une valeur de complexité de dispositif en fonction de la situation de circulation.
